# EUROPEAN PATENT SPECIFICATION

(11) **EP 3 142 021 B1**
(45) Date of publication and mention of the grant of the patent: **05.06.2019**
(21) Application number: 15835811.9
(22) Date of filing: 14.07.2015
(51) Int. Cl.: G06F 17/30

(54) **METHOD AND DEVICE FOR ONLINE INDEX REBUILDING**
VERFAHREN UND VORRICHTUNG ZUR ONLINE-INDEX-WIEDERHERSTELLUNG
PROCÉDÉ ET DISPOSITIF DE RECONSTRUCTION D'INDEX EN LIGNE

(30) Priority: 30.08.2014 CN 201410438770
(43) Date of publication of application: 15.03.2017
(73) Proprietor: Huawei Technologies Co. Ltd., Shenzhen, Guangdong 518129 (CN)
(72) Inventor: ZHU, Zhongchu, Shenzhen Guangdong 518129 (CN); YAO, Li, Shenzhen Guangdong 518129 (CN); WU, Kesong, Shenzhen Guangdong 518129 (CN)
(74) Representative: Kreuz, Georg Maria
(86) International application number: PCT/CN2015/083997
(87) International publication number: WO 2016/029748

(56) References cited:
- CN-A- 102 411 634
- CN-A- 103 336 828
- CN-A- 103 605 657
- CN-A- 103 605 657
- KR-A- 20100 123 957
- US-B1- 6 591 269
- US-B1- 6 591 269
- KIRAN J ACHYUTUNI ET AL: "Two techniques for on-line index modification in shared nothing parallel databases", SIGMOD RECORD, ACM, NEW YORK, NY, US, vol. 25, no. 2, 1 June 1996 (1996-06-01), pages 125-136, XP058121661, ISSN: 0163-5808, DOI: 10.1145/235968.233326
- SRINIVASAN B ET AL: "RECOVERABLE FILE SYSTEM FOR MICROPROCESSOR SYSTEMS", MICROPROCESSORS AND MICROSYSTEMS, IPC BUSINESS PRESS LTD. LONDON, GB, vol. 9, no. 4, 1 May 1985 (1985-05-01), pages 179-183, XP002026284, ISSN: 0141-9331, DOI: 10.1016/0141-9331(85)90004-3

## Description

### TECHNICAL FIELD

The present invention relates to the database field, and in particular, to an online index rebuilding method and apparatus.

### BACKGROUND

A relational database generally uses a B-tree index, and the B-tree index needs to repeatedly perform actions, such as insert and delete, on data of a data table. Therefore, a large quantity of index fragments is generated, and sequential scanning takes a longer time. After data is repeatedly deleted, index entries in an index are not really deleted, but only are marked as deleted and are not cleared. This causes a problem that although a data amount is decreased, index space becomes larger. Therefore, index rebuilding needs to be performed to increase a data access speed and release space. In addition, index rebuilding also needs to be performed when an index tree is over-high.

Currently, there are three index rebuilding manners: recreate (re-create) after offline drop (drop), offline rebuild (rebuild), and online rebuild, where the manner of re-creating an index after dropping is generally applied to an application deployment stage; offline rebuild is applicable to an online system, the system may be shut down for a short time for maintenance, for example, maintenance that is performed at night. For a system running for 7*24 hours, generally the online rebuilding manner is used. In this manner, there is no need to interrupt a current service in an index rebuilding process, thereby causing relatively small impact.

In the prior art, in an online index rebuilding process, it is required to obtain a control right of an exclusive lock of a data table. To obtain the control right of the exclusive lock, it is required that there is no another exclusive lock or shared lock in the data table. If there is the another exclusive lock or shared lock in the data table all the time, the control right of the exclusive lock cannot be obtained all the time, thereby affecting efficiency and a success rate of online index rebuilding

The document CN103605657A discloses a method for online index building. It discloses that : creating an index snapshot, an index cache, and a target index for a source index, blocking a write transaction to a base table of a database during a creating process; migrating source index data in the source index to the target index page by page according to a sequence of an index page; during the migration process, if new index data required by a current index page that is being processed exists in the index cache, migrating both the new index data and source index data that is in the current index page to the target index, or after migration of all the source index data is complete, migrating the new index data in the index cache to the target index.

The document CN102411634A discloses there are two indexes in the shadow root page algorithm, which are current index and shadow index. Both of the current index and the shadow index storing address offset of an object.

### SUMMARY

For the foregoing problem, an objective of the present invention is to provide an online index rebuilding method and apparatus that improve efficiency and a success rate of online index rebuilding.

According to a first aspect, the present invention provides an online index rebuilding apparatus, including:
a receiving module, configured to receive an online index rebuilding request, where the online index rebuilding request includes an identifier of a data table;
a lock processing module, configured to add, according to the online index rebuilding request, a schema shared lock to the data table corresponding to the identifier of the data table, where
the lock processing module is further configured to obtain a latch and obtain a structure control right of the data table by using the latch;
an entry address allocation module, configured to: after the lock processing module obtains the latch, reserve storage space of a shadow index for an original index of the data table, allocate an entry address of the shadow index, and add the entry address of the shadow index to a root page of the data table, where
the lock processing module is further configured to release the latch after the entry address allocation module completes adding the entry address of the shadow index to the root page of the data table;
the shadow index building module, configured to build the shadow index in the storage space of the shadow index according to data of the original index, where
the lock processing module is further configured to obtain the latch again after the shadow index building module completes building the shadow index in the storage space of the shadow index; and
an entry address processing module, configured to update an index entry address on the root page of the data table to the entry address of the shadow index after the lock processing module obtains the latch again, where
the lock processing module is further configured to release the latch obtained again and the schema shared lock after the entry address processing module updates the index entry address on the root page of the data table to the entry address of the shadow index.

In a first possible implementation manner of the first aspect, the online index rebuilding apparatus further includes: a transaction processing module, configured to receive an update request for data of the data table, and update the data of the data table according to the update request.

With reference to the first aspect or the first possible implementation manner of the first aspect, in a second possible implementation manner of the first aspect, the online index rebuilding apparatus further includes an update module, configured to: when index data needs to be updated, determine that the root page of the data table includes the entry address of the shadow index, and update, into the original index and the shadow index, the index data that needs to be updated.

With reference to the first possible implementation manner of the first aspect, in a third possible implementation manner of the first aspect, the entry address processing module is specifically configured to change the index entry address on the root page of the data table to the entry address of the shadow index and delete an entry address of the original index.

With reference to the first possible implementation manner of the first aspect, in a third possible implementation manner of the first aspect, the entry address processing module is specifically configured to modify the entry address of the shadow index to be valid and delete an entry address of the original index.

According to a second aspect, the present invention provides an online index rebuilding method, including:
receiving an online index rebuilding request, where the online index rebuilding request includes an identifier of a data table;
adding, according to the online index rebuilding request, a schema shared lock to the data table corresponding to the identifier of the data table;
obtaining a latch and obtaining a structure control right of the data table by using the latch;
after the latch is obtained, reserving storage space of a shadow index for an original index of the data table, allocating an entry address of the shadow index, and adding the entry address of the shadow index to a root page of the data table;
releasing the latch after the adding the entry address of the shadow index to a root page of the data table is completed;
building the shadow index in the storage space of the shadow index according to data of the original index;
obtaining the latch again after the building the shadow index in the storage space of the shadow index is completed;
updating an index entry address on the root page of the data table to the entry address of the shadow index after the latch is obtained again; and
releasing the latch obtained again and the schema shared lock after the index entry address on the root page of the data table is updated to the entry address of the shadow index.

In a first possible implementation manner of the second aspect, the online index rebuilding method further includes: receiving an update request for data of the data table, and updating the data of the data table according to the update request.

With reference to the first possible implementation manner of the second aspect, after the updating the data of the data table, the method further includes: when index data needs to be updated, determining that the root page of the data table includes the entry address of the shadow index, and updating, into the original index and the shadow index, the index data that needs to be updated.

In a second possible implementation manner of the second aspect, the updating an index entry address on the root page of the data table to the entry address of the shadow index is specifically changing the index entry address on the root page of the data table to the entry address of the shadow index and deleting an entry address of the original index.

In a second possible implementation manner of the second aspect, the updating an index entry address on the root page of the data table to the entry address of the shadow index is specifically modifying the entry address of the shadow index to be valid and deleting an entry address of the original index.

When online index rebuilding is enabled in the solution in the embodiments of the present invention, there is no need to add a schema exclusive lock, but a shared lock is added first to prevent a DDL operation during rebuilding. A database server acquires a latch, so that an original index TI1 becomes static instantaneously, and there is no concurrent operation; and starts online index rebuilding after adding an entry address of a shadow index to a root page of a data table T. In a rebuilding process, if there is a transaction operation, an independent shared lock needs to be added, so that there is no mutual interference. By means of the method in the embodiments of the present invention, the online index rebuilding method and apparatus are improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an online index rebuilding apparatus according to an embodiment of the present invention;
FIG. 2 is a schematic structural diagram of another online index rebuilding apparatus according to an embodiment of the present invention;
FIG. 3 is a schematic structural diagram of another online index rebuilding apparatus according to an embodiment of the present invention;
FIG. 4 is a schematic flowchart of an online index rebuilding method according to an embodiment of the present invention;
FIG. 5 is a schematic flowchart of another online index rebuilding method according to an embodiment of the present invention;
FIG. 6 is a schematic flowchart of another online index rebuilding method according to an embodiment of the present invention; and
FIG. 7 is a schematic flowchart of another online index rebuilding method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention provide an online index rebuilding method and apparatus, which are used to improve efficiency and a success rate of online index rebuilding. Details are separately described in the following.

To facilitate understanding of the embodiments of the present invention, a database system in the embodiments of the present invention is first described in the following. A database system includes a database client, a database server, and a data source, where the database client is configured to receive various requests or commands sent by third-party software, an administrator, or the like, and send the various requests or commands to the database server, so that the database server performs corresponding processing according to different requests or commands. The data source is an object, in a database, that manages resources such as a data table, a view, and a storage process. For example, the object is a schema (schema) in an Oracle database or a database (database) in a MySQL database. The data source may include multiple different data tables, and each data table has one root page (root), where the root page includes an entry address of an index of the data table, the index of the data table can be queried by using the entry address, and values in the data table can be queried by using the index. The data source further stores the root page, an original index, and a shadow index that are of the data table, and the database server may be specifically the online index rebuilding apparatus in the embodiments of the present invention.

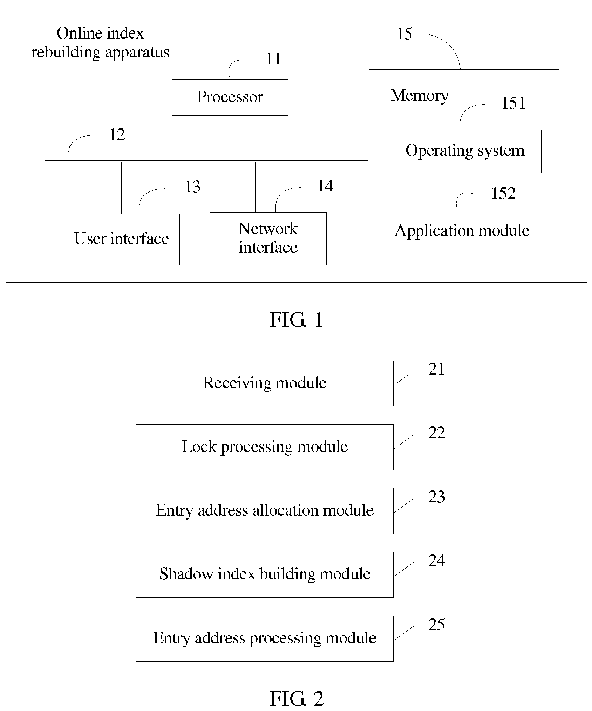

Referring to FIG. 1, FIG. 1 is a schematic structural diagram of an online index rebuilding apparatus according to an embodiment of the present invention, where the apparatus is configured to execute an online index rebuilding method according to an embodiment of the present invention. As shown in FIG. 1, the online index rebuilding apparatus includes: at least one processor 11, such as a CPU; at least one network interface 14 or another user interface 13; a memory 15; and at least one communications bus 12. The communications bus 12 is configured to implement connection and communication between the components. Optionally, the user interface 13 may include a USB interface and another standard interface and wired interface. Optionally, the network interface 14 may include a Wi-Fi interface and another wireless interface. The memory 15 may include a high-speed RAM memory, and may further include a non-volatile memory (non-volatile memory), for example, at least one disk memory. Optionally, the memory 15 may include at least one storage apparatus that is far from the processor 11.

In some implementation manners, the memory 15 stores the following elements: executable modules or data structures, or their subsets, or their extended sets:
an operating system 151, including various system programs, which are used to implement various basic services and process hardware-based tasks; and
an application module 152, including various application programs, such as a device control service program and a device identification service program, which are used to implement various application services.

Specifically, the processor 11 is configured to invoke a program stored in the memory 15 to perform the following operations:
receive an online index rebuilding request, where the online index rebuilding request includes an identifier of a data table; add, according to the online index rebuilding request, a schema shared lock to the data table corresponding to the identifier of the data table; obtain a latch and obtain a structure control right of the data table by using the latch; after the latch is obtained, reserve storage space of a shadow index for an original index of the data table, allocate an entry address of the shadow index, and add the entry address of the shadow index to a root page of the data table; release the latch after the entry address of the shadow index is added to the root page of the data table; build the shadow index in the storage space of the shadow index according to data of the original index; obtain the latch again after the shadow index is built in the storage space of the shadow index; update an index entry address on the root page of the data table to the entry address of the shadow index after the latch is obtained again; and release the latch obtained again and the schema shared lock after the index entry address on the root page of the data table is updated to the entry address of the shadow index.

In the foregoing technical solution, when online index rebuilding is enabled in the solution in this embodiment of the present invention, there is no need to add a schema exclusive lock, but a shared lock is added first to prevent a DDL operation during rebuilding. A database server acquires a latch, so that an original index TI1 becomes static instantaneously, and there is no concurrent operation; and starts to build a shadow index after adding an entry address of the shadow index to a root page of a data table T. When the shadow index is being built, if there is a transaction operation, an independent shared lock needs to be added, so that there is no mutual interference. After the shadow index is built, the latch is first acquired to preempt a control right, and change an entry address of an index of the root page. That is, the shadow index is adopted, the original index is discarded, and switching is completed.

Referring to FIG. 2, FIG. 2 is a schematic structural diagram of an online index rebuilding apparatus according to an embodiment of the present invention, where the apparatus is configured to execute an online index rebuilding method according to an embodiment of the present invention. As shown in FIG. 2, the online index rebuilding apparatus includes:
a receiving module 21, configured to receive an online index rebuilding request, where the online index rebuilding request includes an identifier of a data table; a lock processing module 22, configured to add, according to the online index rebuilding request, a schema shared lock to the data table corresponding to the identifier of the data table, where the lock processing module 22 is further configured to obtain a latch and obtain a structure control right of the data table by using the latch; an entry address allocation module 23, configured to: after the lock processing module obtains the latch, reserve storage space of a shadow index for an original index of the data table, allocate an entry address of the shadow index, and add the entry address of the shadow index to a root page of the data table, where the lock processing module is further configured to release the latch after the entry address allocation module completes adding the entry address of the shadow index to the root page of the data table; the shadow index building module 24, configured to build the shadow index in the storage space of the shadow index according to data of the original index, where the lock processing module is further configured to obtain the latch again after the shadow index building module completes building the shadow index in the storage space of the shadow index; and an entry address processing module 25, configured to update an index entry address on the root page of the data table to the entry address of the shadow index after the lock processing module obtains the latch again, where the lock processing module 22 is further configured to release the latch obtained again and the schema shared lock after the entry address processing module updates the index entry address on the root page of the data table.

After receiving an online index rebuilding request sent by a database client, the receiving module 21 sends the online index rebuilding request to the lock processing module 22. After receiving the online index rebuilding request, the lock processing module 22 determines, according to the online index rebuilding request, that it is required to perform online index rebuilding. In this case, the lock processing module 22 queries a data table corresponding to an identifier of the data table and checks a lock status of the data table; and if there is no exclusive lock in the data table, adds a shared lock to the data table, and applies for and obtains a latch, so that a thread control right can be obtained, and shadow index building can be implemented, where the shared lock herein may be a schema-level lock. The entry address allocation module 23 allocates storage space of a shadow index for an original index of the data table, and in this case, the storage space of the shadow index is empty; the entry address allocation module 23 allocates an entry address of the shadow index, adds the entry address of the shadow index to a root page of the data table, and further needs to add the entry address of the shadow index of the original index to a data dictionary; then, the lock processing module 22 releases the latch. The shadow index building module 24 builds the shadow index in the storage space of the shadow index according to data of the original index, for example, copies the data of the original index to the shadow index and then re-adjusts index data to form a concise index with less layers. After the original index is rebuilt in the shadow index, the lock processing module 22 obtains the latch again. The entry address processing module 25 updates an index entry address on the root page of the data table to the entry address of the shadow index after the lock processing module obtains the latch again. The lock processing module 22 releases the latch obtained again and the schema shared lock after the entry address processing module completes updating the index entry address on the root page of the data table to the entry address of the shadow index.

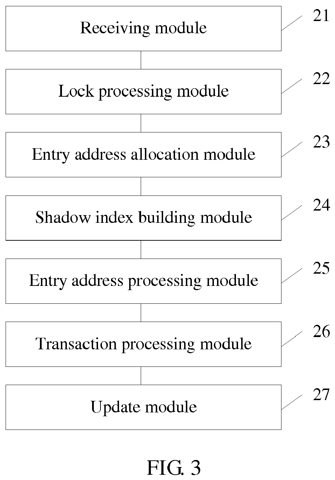

As shown in FIG. 3, the online index rebuilding apparatus further includes: a transaction processing module 26, configured to receive an update request for data of the data table, and update the data of the data table according to the update request. That is, because an exclusive lock is not used in the present invention, in an online index rebuilding process, a DML operation such as updating the data of the data table can still be implemented.

As shown in FIG. 3, the online index rebuilding apparatus further includes an update module 27, configured to: when index data needs to be updated, determine that the root page of the data table includes the entry address of the shadow index, and update, into the original index and the shadow index, the index data that needs to be updated. In the online index rebuilding process, when updating the data table by another transaction causes the index data to be updated, the update module may synchronously add the updated index data to the original index and the shadow index.

As shown in FIG. 3, the entry address processing module 25 in the online index rebuilding apparatus is specifically configured to change the index entry address on the root page of the data table to the entry address of the shadow index and delete an entry address of the original index. Online index rebuilding may be completed by changing the index entry address on the root page. In this way, when a new transaction accesses an index subsequently, the new transaction accesses the entry address of the shadow index; after the entry address of the original index is deleted, the entry address of the shadow index becomes a new entry address of the original index.

As shown in FIG. 3, the entry address processing module 25 in the online index rebuilding apparatus is specifically configured to modify the entry address of the shadow index to be valid and delete an entry address of the original index. Online index rebuilding may be completed by setting the index entry address on the root page to be valid. In this way, when a new transaction accesses an index subsequently, the new transaction accesses the entry address of the shadow index; after the entry address of the original index is deleted, the entry address of the shadow index becomes a new entry address of the original index.

To describe this embodiment of the present invention more clearly, the following describes in detail operation processes of executing the foregoing embodiment by the online index rebuilding apparatus.

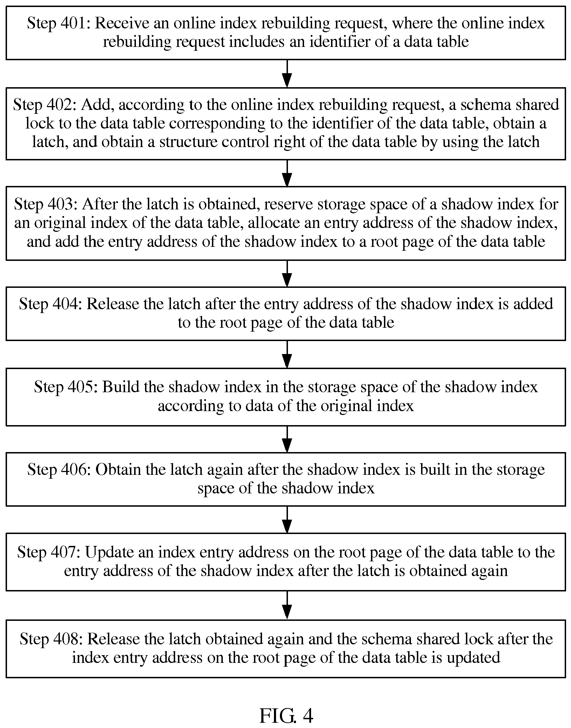

FIG. 4 is a flowchart of an online index rebuilding method according to an embodiment of the present invention, where the method specifically includes:
Step 401: Receive an online index rebuilding request, where the online index rebuilding request includes an identifier of a data table.
Step 402: Add, according to the online index rebuilding request, a schema shared lock to the data table corresponding to the identifier of the data table, obtain a latch, and obtain a structure control right of the data table by using the latch.

In this way, a control right of a root page of the data table can be acquired.

Step 403: After the latch is obtained, reserve storage space of a shadow index for an original index of the data table, allocate an entry address of the shadow index, and add the entry address of the shadow index to a root page of the data table.

Step 404: Release the latch after the entry address of the shadow index is added to the root page of the data table.

Step 405: Build the shadow index in the storage space of the shadow index according to data of the original index.

Step 406: Obtain the latch again after the shadow index is built in the storage space of the shadow index.

Step 407: Update an index entry address on the root page of the data table to the entry address of the shadow index after the latch is obtained again.

Step 408: Release the latch obtained again and the schema shared lock after the index entry address on the root page of the data table is updated to the entry address of the shadow index.

Further, the method further includes: receiving an update request for data of the data table, and updating the data of the data table according to the update request.

Further, after the updating the data of the data table, the method further includes: when index data needs to be updated, determining that the root page of the data table includes the entry address of the shadow index, and updating, into the original index and the shadow index, the index data that needs to be updated.

Further, the updating an index entry address on the root page of the data table to the entry address of the shadow index is specifically changing the index entry address on the root page of the data table to the entry address of the shadow index and deleting an entry address of the original index.

Further, the updating an index entry address on the root page of the data table to the entry address of the shadow index is specifically modifying the entry address of the shadow index to be valid and deleting an entry address of the original index.

When online index rebuilding is enabled in the solution in this embodiment of the present invention, there is no need to add a schema exclusive lock, but a shared lock is added first to prevent a DDL operation during rebuilding. A database server acquires a latch, so that an original index TI1 becomes static instantaneously, and there is no concurrent operation; and starts online index rebuilding after adding an entry address of a shadow index to a root page of a data table T. In a shadow index building process, if there is a transaction operation, an independent shared lock needs to be added, so that there is no mutual interference. After shadow index building ends, the latch is first acquired to preempt a control right, and then complete a change process of an entry address on the root page. That is, the shadow index is adopted, the original index is discarded, and switching is completed. In this case, if there is a transaction that is not completed, it does not affect adopting of the shadow index. After the shadow index is adopted, the transaction may proceed. By means of the method in this embodiment of the present invention, the online index rebuilding method and apparatus are improved.

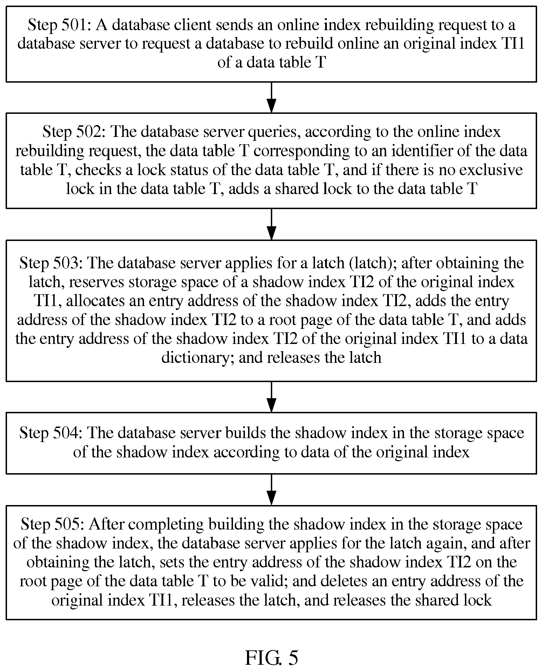

FIG. 5 is a flowchart of an online index rebuilding method according to an embodiment of the present invention, where the method specifically includes:
Step 501: A database client sends an online index rebuilding request to a database server to request a database to rebuild online an original index TI1 of a data table T, where the online index rebuilding request includes an identifier of the data table T.

The database client may be an application program or a maintenance tool, and the online index rebuilding request may be a rebuild index command.

Step 502: The database server queries, according to the online index rebuilding request, the data table T corresponding to the identifier of the data table T, checks a lock status of the data table T, and if there is no exclusive lock in the data table T, adds a shared lock to the data table T. The shared lock herein may be a schema-level lock and is valid for the entire data table T.

In the prior art, the database server needs to add a schema exclusive lock to the data table T, which may be specifically a schema-level lock and is valid for the entire data table T. The database server can exclusively occupy the data table T only by adding the schema exclusive lock to the data table T, so that any transaction can be forbidden to perform a data definition language (data definition language, DDL) operation and data manipulation language (data manipulation language, DML) operations except select on the data table T. Therefore, data consistency can be ensured in an online index rebuilding process. After the database server allocates an entry address of a shadow index, the database server downgrades the schema exclusive lock to a schema shared lock. In this case, if there is any process that needs to perform a DDL operation on a structure of the data table T, the database refuses the DDL operation according to the shared lock; but a DML operation can be performed on the data table T, and data of the data table T can still be modified. When the shadow index is rebuilt, it is required to update an index address on a root page to the address of the shadow index; however, for this processing, it is required to add a schema exclusive lock to the data table T. However, in the online index rebuilding process, if there is an application enabling a transaction, an exclusive occupation opportunity for the data table T can be preempted only after the transaction is submitted; then, an exclusive lock can be added to the data table T, and online index rebuilding can be completed. If the transaction is not submitted at all times, as time goes by, data of the application is continuously updated, online index rebuilding cannot be completed all the time, and the database server needs to keep the original index and the shadow index concurrent and wait the application to submit the transaction. During waiting, overhead for synchronously modifying the shadow index is extra performance costs. Only after a long-time transaction in the data table is submitted, a schema exclusive lock can be added to the data table, an index can be normally switched, and online index rebuilding can be completed. If the application program has a bug, and the transaction is not submitted at all times, in this case, there are two concurrent indexes existing for a long time in the online index rebuilding process, and the database server is in a starvation state because an exclusive occupation and control right cannot be obtained, and the shadow index cannot be adopted. Obviously, this seriously affects a success rate and efficiency of online index rebuilding.

Therefore, in the present invention, in an online index rebuilding process, no schema exclusive lock but a shared lock is added to a data table, and another transaction still cannot modify a structure of the data table. That is, the another transaction cannot perform a DDL operation on a data table T, and cannot modify an index structure of the data table T; but the another transaction can modify data of the data table T, that is, performing a DML operation on the data table T by the another transaction is not affected.

Step 503: The database server applies for a latch (latch). After obtaining the latch, a thread that processes online index rebuilding instantaneously has a modification and control right of a structure of the data table T, and another thread cannot modify the structure of the data table T at the same time; therefore, may reserve storage space of a shadow index TI2 of the original index TI1, allocate an entry address of the shadow index TI2, add the entry address of the shadow index TI2 to a root page of the data table T, and add the entry address of the shadow index TI2 of the original index TI1 to a data dictionary; and after completing the foregoing operations, releases the latch.

Generally, the root page of the data table T has an entry address of only one index, that is, an entry address of the real original index TI1; data of the data table T can be quickly queried according to the original index TI1. When the original index TI1 is being rebuilt, the database server adds the entry address of the shadow index TI2 to the root page, and in this case, the entry address of the shadow index TI2 is an invalid entry address. That is, there may be entry addresses of two indexes on the root page, but only one entry address is valid. Whether an entry address of an index on the root page is valid or invalid may be identified by using a flag bit. For example, if the flag bit is 1, the data indicates that the entry address of the index is valid; or, if the flag bit is 0, the data indicates that the entry address of the index is invalid. Therefore, a flag bit of the entry address of the original index TI1 may be 1, and a flag bit of the entry address of the shadow index TI2 may be 0. Certainly, whether the entry address of the index on the root page is valid or invalid may be identified in another manner.

In a process of querying the data of the data table, the database server directly queries the entry address, of the original index TI1, whose flag bit is valid, but does not query the entry address, of the shadow index TI2, whose flag bit is invalid. However, during index modification, the database server queries whether there are entry addresses for both an invalid flag bit and a valid flag bit. If yes, the data indicates that an index is being rebuilt currently, and therefore, during index content modification, both the original index TI1 and the shadow index TI2 need to be modified.

The latch is a serialized locking mechanism used to provide exclusive access to a shared data structure in a memory. The latch is used to quickly lock a resource for a short time to prevent multiple concurrent processes from modifying and accessing a shared resource at the same time, and is an extremely lightweight lock that can be acquired and released extremely fast. The latch can prevent a problem that multiple concurrent processes modify and access a shared resource at the same time. That is, the shared resource can be preempted and accessed instantaneously by using the latch, and then the shared resource can be modified, so that the root page of the data table T can be modified. However, an exclusive lock mainly functions on a database object, such as a table, an index, and a view. The exclusive lock can be released only after a transaction ends correctly. Therefore, occupation duration depends on a size of the transaction. From the foregoing description, it may be learned that because the latch is lightweight, a resource can be quickly locked for a short time, and a shared resource can be modified and accessed. However, the exclusive lock needs to lock a database object for a long time, and the exclusive lock can be preempted only when the database object (data table) does not have another lock. However, preempting the latch in the present invention is quicker and easier.

Step 504: The database server builds the shadow index in the storage space of the shadow index according to data of the original index.

Data of the shadow index TI2 built in step 503 is empty at the beginning, and only after the database server builds the shadow index in the shadow index according to the data of the original index, the storage space of the built shadow index has data; a structure of the built index is more concise and clearer, has a clear hierarchy, and supports quicker querying compared with a structure of the original index.

Data modification to the data table T generally causes the index of the data table T also to be modified. When the database server performs querying on an index entry address on the root page of the data table T, the database server queries entry addresses of two indexes, one of which is the entry address of the original index TI1, and the other of which is the entry address of the shadow index TI2. Therefore, modification to the original index TI1 needs to be synchronized to modification to the shadow index TI2, so as to maintain content synchronization between the two indexes, the original index TI1 and the shadow index TI2.

Step 505: After completing rebuilding the original index in the shadow index, the database server applies for the latch again, and after obtaining the latch, updates the entry address of the shadow index TI2 on the root page of the data table T to an index entry address on the root page of the data table; and deletes an entry address of the original index TI1, releases the latch, and releases the shared lock.

When completing rebuilding the shadow index TI2, the database server applies for the latch from an index latch protection mechanism, and obtains a control right of the data table T; the database server changes the entry address of the shadow index on the root page of the data table T to be valid, deletes the entry address of the original index TI1 and the original index TI1, and releases the schema shared lock of the data table T. In this way, the shadow index TI2 is adopted, and the original index TI1 becomes invalid. The database server changes the index entry address on the root page of the data table to the entry address of the shadow index, and deletes the entry address of the original index.

The database server may further change, in the following manner, the entry address of the shadow index on the root page of the data table T to be valid: The database server changes the index entry address, of the data table, on the root page to the entry address of the shadow index TI2.

When online index rebuilding is enabled in the solution in this embodiment of the present invention, there is no need to add a schema exclusive lock, but a shared lock is added first to prevent a DDL operation during rebuilding. A database server acquires a latch, so that an original index TI1 becomes static instantaneously, and there is no concurrent operation; and starts to build a shadow index after adding an entry address of the shadow index to a root page of a data table T. In a shadow index building process, if there is a transaction operation, an independent shared lock needs to be added, so that there is no mutual interference. After shadow index building ends, the latch is first acquired to preempt a control right, and then complete a change of an index entry address on the root page. That is, the shadow index is adopted, the original index is discarded, and switching is completed. In this case, if there is a transaction that is not completed, it does not affect adopting of the shadow index. After the shadow index is adopted, the transaction may proceed.

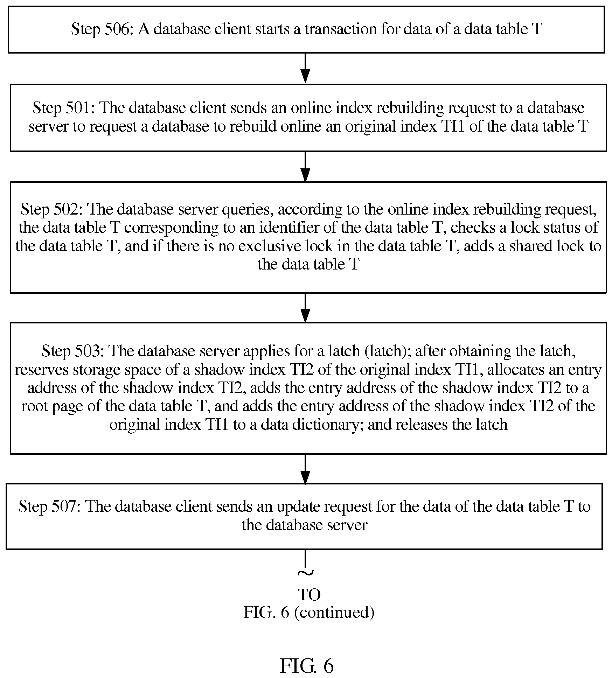

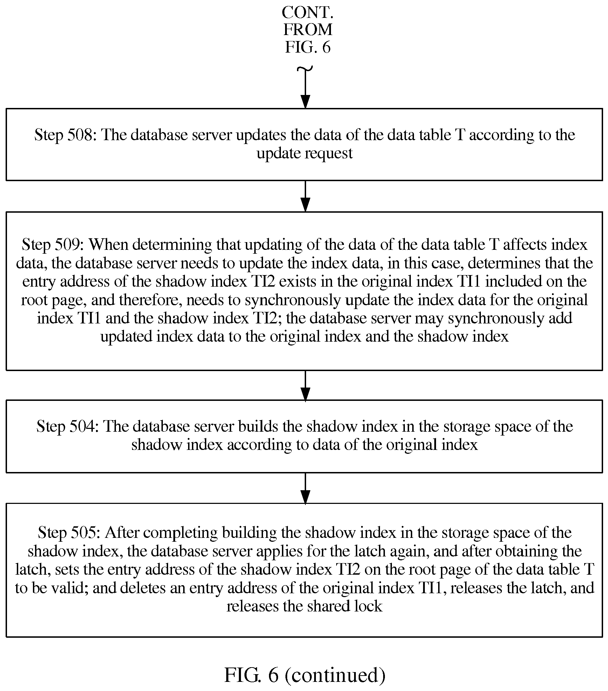

In another embodiment of the present invention, in the foregoing process, before step 501, there may be a transaction accessing the data table T, for example, the following step 506. Provided that the transaction does not add an exclusive lock to the data table T, step 501 can still be performed. As shown in FIG. 6, the method further includes:
Step 506: The database client starts a transaction for data of the data table T.

If the transaction does not add an exclusive lock to the data table, in this case, the database server may further receive an online index rebuilding request for the data table T, and a subsequent process is like steps 501 to 503.

After the latch is released in step 503, and before the database server applies for the latch again, the method may further include:
Step 507: The database client sends an update request for the data of the data table T to the database server.
Step 508: The database server updates the data of the data table T according to the update request.
Step 509: When determining that updating of the data of the data table T affects index data, the database server needs to update the index data, in this case, determines that the entry address of the shadow index TI2 exists in the original index TI1 included on the root page, and therefore, needs to synchronously update the index data for the original index TI1 and the shadow index TI2; the database server may synchronously add updated index data into the original index and the shadow index.

There is no definite sequence between steps 507 to 509 and step 504.

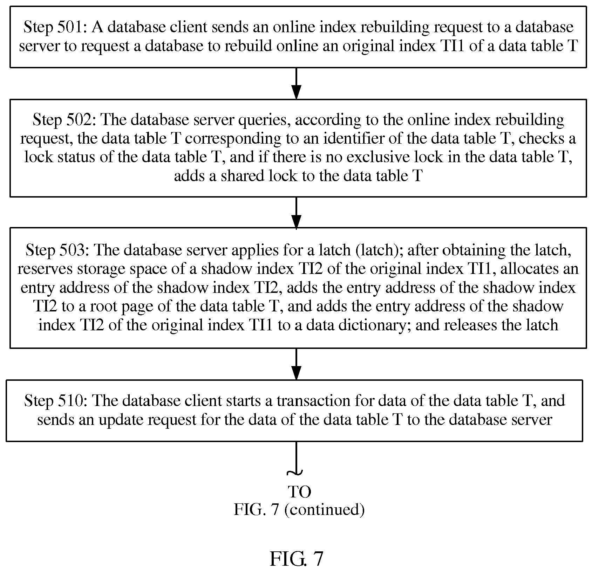

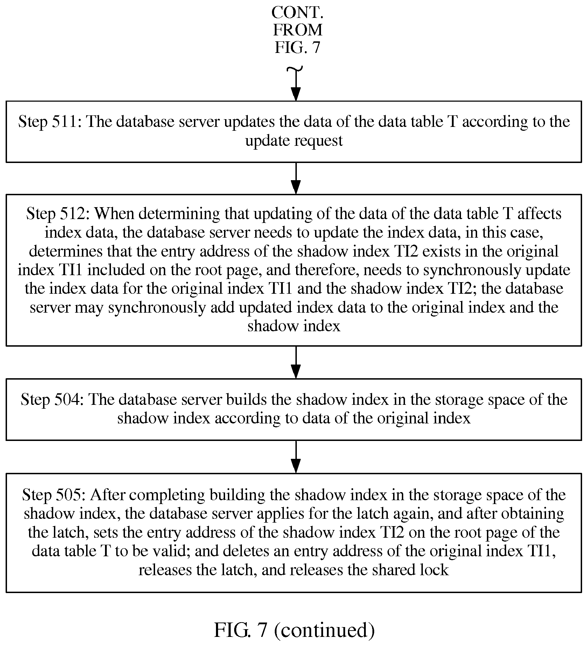

In the foregoing process, a transaction is enabled after online rebuilding is enabled, and the data table T participates in this process. By the time index rebuilding ends, the transaction still is not submitted. As shown in FIG. 7, after step 503, and before the database server applies for the latch again, the method may further include:
Step 510: The database client starts a transaction for data of the data table T, and sends an update request for the data of the data table T to the database server.
Step 511: The database server updates the data of the data table T according to the update request.
Step 512: When determining that updating of the data of the data table T affects index data, the database server needs to update the index data, in this case, determines that the entry address of the shadow index TI2 exists in the original index TI1 included on the root page, and therefore, needs to synchronously update the index data for the original index TI1 and the shadow index TI2; the database server may synchronously add updated index data into the original index and the shadow index.

There is no definite sequence between steps 510 to 512 and step 504.

In the prior art, during online index rebuilding, an exclusive occupation right of a data table T needs to be obtained, and an exclusive lock needs to be added; when there is a transaction that is not submitted, a database cannot preempt the exclusive occupation right of the data table T, and an online index rebuilding process cannot be enabled. However, in the technical solution in this embodiment of the present invention, during online index rebuilding, only a shared lock needs to be added to a data table T, and ongoing rebuilding is marked at an entry of a data dictionary of the table, so that DDL modification can be prevented. Therefore, there is no need to apply for a heavyweight exclusive lock, only a shared lock needs to be added, and enabling of online index rebuilding is not prevented. Because a requirement for preempting a latch is lower than a requirement for preempting a schema exclusive lock, and the latch can be preempted without needing to wait all transactions to end, efficiency and a success rate of online index rebuilding are improved.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM for short), or the like.

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. An online index rebuilding apparatus, comprising:
a receiving module (21), configured to receive an online index rebuilding request, wherein the online index rebuilding request comprises an identifier of a data table;
a lock processing module (22), configured to add, according to the online index rebuilding request, a schema shared lock to the data table corresponding to the identifier of the data table, wherein
the lock processing module (22) is further configured to obtain a latch and obtain a structure control right of the data table by using the latch;
an entry address allocation module (23), configured to: after the lock processing module obtains the latch, reserve storage space of a shadow index for an original index of the data table, allocate an entry address of the shadow index, and add the entry address of the shadow index to a root page of the data table, wherein the root page comprises an entry address of an index of the data table, wherein the entry address of the index of the data table is the entry address of the original index;
the lock processing module (22) is further configured to release the latch after the entry address allocation module completes adding the entry address of the shadow index to the root page of the data table;
a shadow index building module (24), configured to build the shadow index in the storage space of the shadow index according to data of the original index, wherein
the lock processing module (22) is further configured to obtain the latch again after the shadow index building module completes building the shadow index in the storage space of the shadow index; and
an entry address processing module(25), configured to update the index entry address on the root page of the data table to the entry address of the shadow index after the lock processing module obtains the latch again, wherein
the lock processing module (22) is further configured to release the latch obtained again and the schema shared lock after the entry address processing module updates the index entry address on the root page of the data table to the entry address of the shadow index.

2. The online index rebuilding apparatus according to claim 1, further comprising: a transaction processing module, configured to receive an update request for data of the data table, and update the data of the data table according to the update request.

3. The online index rebuilding apparatus according to either of claim 1 or 2, further comprising an update module, configured to: when index data needs to be updated, determine that the root page of the data table comprises the entry address of the shadow index, and update, into the original index and the shadow index, the index data that needs to be updated.

4. The online index rebuilding apparatus according to claim 1, wherein the entry address processing module is specifically configured to change the index entry address on the root page of the data table to the entry address of the shadow index and delete an entry address of the original index.

5. The online index rebuilding apparatus according to claim 1, wherein the entry address processing module is specifically configured to modify the entry address of the shadow index to be valid and delete an entry address of the original index.

6. An online index rebuilding method, wherein the method comprises:
receiving (401) an online index rebuilding request, wherein the online index rebuilding request comprises an identifier of a data table;
adding (402), according to the online index rebuilding request, a schema shared lock to the data table corresponding to the identifier of the data table;
obtaining(402) a latch and obtaining a structure control right of the data table by using the latch;
after the latch is obtained, reserving (403) storage space of a shadow index for an original index of the data table, allocating an entry address of the shadow index, and adding the entry address of the shadow index to a root page of the data table, wherein the root page comprises an entry address of an index of the data table, wherein the entry address of the index of the data table is the entry address of the original index;
releasing (404) the latch after the adding the entry address of the shadow index to a root page of the data table is completed;
building (405) the shadow index in the storage space of the shadow index according to data of the original index;
obtaining(406) the latch again after the building the shadow index in the storage space of the shadow index is completed;
updating(407) the index entry address on the root page of the data table to the entry address of the shadow index after the latch is obtained again; and
releasing (408) the latch obtained again and the schema shared lock after the index entry address on the root page of the data table is updated to the entry address of the shadow index.

7. The method according to claim 6, further comprising:
receiving an update request for data of the data table, and updating the data of the data table according to the update request.

8. The method according to claim 7, after the updating the data of the data table, further comprising: when index data needs to be updated, determining that the root page of the data table comprises the entry address of the shadow index, and updating, into the original index and the shadow index, the index data that needs to be updated.

9. The method according to claim 6, wherein the updating an index entry address on the root page of the data table to the entry address of the shadow index is specifically changing the index entry address on the root page of the data table to the entry address of the shadow index and deleting an entry address of the original index.

10. The method according to claim 6, wherein the updating an index entry address on the root page of the data table to the entry address of the shadow index is specifically modifying the entry address of the shadow index to be valid and deleting an entry address of the original index.

## Patentansprüche

1. Online-Indexwiederaufbauvorrichtung, die Folgendes umfasst:
ein Empfangsmodul (21), das konfiguriert ist, eine Online-Indexwiederaufbauanforderung zu empfangen, wobei die Online-Indexwiederaufbauanforderung eine Kennung einer Datentabelle umfasst;
ein Sperrverarbeitungsmodul (22), das konfiguriert ist, gemäß der Online-Indexwiederaufbauanforderung, eine gemeinsame Schemasperre zu der Datentabelle, die der Kennung der Datentabelle entspricht, hinzuzufügen, wobei
das Sperrverarbeitungsmodul (22) ferner konfiguriert ist, eine Sperre zu erhalten und ein Struktursteuerrecht der Datentabelle durch Verwenden der Sperre zu erhalten;
ein Eingabeadressenzuteilungsmodul (23), das konfiguriert ist zum: nachdem das Sperrverarbeitungsmodul die Sperre erhält, Reservieren von Speicherplatz eines Schattenindex für einen Originalindex der Datentabelle, Zuteilen einer Eingabeadresse des Schattenindex und Hinzufügen der Eingabeadresse des Schattenindex zu einer Stammseite der Datentabelle, wobei die Stammseite eine Eingabeadresse eines Index der Datentabelle umfasst, wobei die Eingabeadresse des Index der Datentabelle die Eingabeadresse des Originalindex ist;
wobei das Sperrverarbeitungsmodul (22) ferner konfiguriert ist, die Sperre zu lösen, nachdem das Eingabeadressenzuteilungsmodul das Hinzufügen der Eingabeadresse des Schattenindex zu der Stammseite der Datentabelle abschließt;
ein Schattenindexaufbaumodul (24), das konfiguriert ist, den Schattenindex in dem Speicherplatz des Schattenindex gemäß den Daten des Originalindex zu erstellen, wobei
das Sperrverarbeitungsmodul (22) ferner konfiguriert ist, die Sperre erneut zu erhalten, nachdem das Schattenindexaufbaumodul abschließt, den Schattenindex in dem Speicherplatz des Schattenindex zu erstellen; und
ein Eingabeadressenverarbeitungsmodul (25), das konfiguriert ist, die Indexeingabeadresse auf der Stammseite der Datentabelle zu der Eingabeadresse des Schattenindex zu aktualisieren, nachdem das Sperrverarbeitungsmodul die Sperre erneut erhält, wobei
das Sperrverarbeitungsmodul (22) ferner konfiguriert ist, die erneut erhaltene Sperre und die gemeinsame Schemasperre zu lösen, nachdem das Eingabeadressenverarbeitungsmodul die Indexeingabeadresse auf der Stammseite der Datentabelle zu der Eingabeadresse des Schattenindex aktualisiert.

2. Online-Indexwiederaufbauvorrichtung nach Anspruch 1, die ferner Folgendes umfasst: ein Transaktionsverarbeitungsmodul, das konfiguriert ist, eine Aktualisierungsanforderung für Daten der Datentabelle zu empfangen und die Daten der Datentabelle gemäß der Aktualisierungsanforderung zu aktualisieren.

3. Online-Indexwiederaufbauvorrichtung nach Anspruch 1 oder 2, die ferner ein Aktualisierungsmodul umfasst, das konfiguriert ist zum: dann, wenn Indexdaten aktualisiert werden müssen, Bestimmen, dass die Stammseite der Datentabelle die Eingabeadresse des Schattenindex umfasst, und Aktualisieren in den Originalindex und den Schattenindex der Indexdaten, die aktualisiert werden müssen.

4. Online-Indexwiederaufbauvorrichtung nach Anspruch 1, wobei das Eingabeadressenverarbeitungsmodul speziell konfiguriert ist, die Indexeingabeadresse auf der Stammseite der Datentabelle zu der Eingabeadresse des Schattenindex zu ändern und eine Eingabeadresse des Originalindex zu löschen.

5. Online-Indexwiederaufbauvorrichtung nach Anspruch 1, wobei das Eingabeadressenverarbeitungsmodul speziell konfiguriert ist, die Eingabeadresse des Schattenindex so zu ändern, dass sie gültig ist, und eine Eingabeadresse des Originalindex zu löschen.

6. Online-Indexwiederaufbauverfahren, wobei das Verfahren Folgendes umfasst:
Empfangen (401) einer Online-Indexwiederaufbauanforderung, wobei die Online-Indexwiederaufbauanforderung, eine Kennung einer Datentabelle umfasst;
Hinzufügen (402) gemäß der Online-Indexwiederaufbauanforderung einer gemeinsamen Schemasperre zu der Datentabelle, die der Kennung der Datentabelle entspricht;
Erhalten (402) einer Sperre und Erhalten eines Struktursteuerrechts der Datentabelle durch Verwenden der Sperre;
nachdem die Sperre erhalten wurde, Reservieren (403) von Speicherplatz eines Schattenindex für einen Originalindex der Datentabelle, Zuteilen einer Eingabeadresse des Schattenindex und Hinzufügen der Eingabeadresse des Schattenindex zu einer Stammseite der Datentabelle, wobei die Stammseite eine Eingabeadresse eines Index der Datentabelle umfasst, wobei die Eingabeadresse des Index der Datentabelle die Eingabeadresse des Originalindex ist;
Lösen (404) der Sperre, nachdem das Hinzufügen der Eingabeadresse des Schattenindex zu einer Stammseite der Datentabelle abgeschlossen worden ist;
Erstellen (405) des Schattenindex in dem Speicherplatz des Schattenindex gemäß den Daten des Originalindex;
erneutes Erhalten (406) der Sperre, nachdem das Erstellen des Schattenindex in dem Speicherplatz des Schattenindex abgeschlossen ist;
Aktualisieren (407) der Indexeingabeadresse auf der Stammseite der Datentabelle zu der Eingabeadresse des Schattenindex, nachdem die Sperre erneut erhalten wird; und
Lösen (408) der erneut erhaltenen Sperre und der gemeinsamen Schemasperre, nachdem die Indexeingabeadresse auf der Stammseite der Datentabelle zu der Eingabeadresse des Schattenindex aktualisiert wird.

7. Verfahren nach Anspruch 6, das ferner Folgendes umfasst:
Empfangen einer Aktualisierungsanforderung für Daten der Datentabelle und Aktualisieren der Daten der Datentabelle gemäß der Aktualisierungsanforderung.

8. Verfahren nach Anspruch 7, das nach dem Aktualisieren der Daten der Datentabelle ferner Folgendes umfasst: dann, wenn Indexdaten aktualisiert werden müssen, Bestimmen, dass die Stammseite der Datentabelle die Eingabeadresse des Schattenindex umfasst, und Aktualisieren in den Originalindex und den Schattenindex, der Indexdaten, die aktualisiert werden müssen.

9. Verfahren nach Anspruch 6, wobei das Aktualisieren einer Indexeingabeadresse auf der Stammseite der Datentabelle zu der Eingabeadresse des Schattenindex ist, die Indexeingabeadresse auf der Stammseite der Datentabelle zu der Eingabeadresse des Schattenindex zu ändern und eine Eingabeadresse des Originalindex zu löschen.

10. Verfahren nach Anspruch 6, wobei das Aktualisieren einer Indexeingabeadresse auf der Stammseite der Datentabelle zu der Eingabeadresse des Schattenindex ist, speziell die Eingabeadresse des Schattenindex so zu ändern, dass sie gültig ist, und eine Eingabeadresse des Originalindex zu löschen.

## Revendications

1. Appareil de reconstruction d'index en ligne, comprenant :
un module de réception (21), configuré pour recevoir une demande de reconstruction d'index en ligne, la demande de reconstruction d'index en ligne comprenant un identifiant d'une table de données ;
un module de traitement de verrouillage (22), configuré pour ajouter, conformément à la demande de reconstruction d'index en ligne, un verrouillage partagé de schéma à la table de données correspondant à l'identifiant de la table de données, dans lequel le module de traitement de verrouillage (22) est configuré en outre pour obtenir un verrou et obtenir un droit de contrôle de structure de la table de données en utilisant le verrou ;
un module d'attribution d'adresse d'entrée (23), configuré pour : après que le module de traitement de verrouillage obtient le verrou, réserver un espace de mémorisation d'un index temporaire d'un index d'origine de la table de données, attribuer une adresse d'entrée de l'index temporaire, et ajouter l'adresse d'entrée de l'index temporaire à une page racine de la table de données, dans lequel la page racine comprend une adresse d'entrée d'un index de la table de données, dans lequel l'adresse d'entrée de l'index de la table de données est l'adresse d'entrée de l'index d'origine ;
le module de traitement de verrouillage (22) est configuré en outre pour libérer le verrou après que le module d'attribution d'adresse d'entrée achève l'ajout de l'adresse d'entrée de l'index temporaire à la page racine de la table de données ;
un module de construction d'index temporaire (24), configuré pour construire l'index temporaire dans l'espace de mémorisation de l'index temporaire conformément à des données de l'index d'origine, dans lequel
le module de traitement de verrouillage (22) est configuré en outre pour obtenir à nouveau le verrou après que le module de construction d'index temporaire achève la construction de l'index temporaire dans l'espace de mémorisation de l'index temporaire ; et
un module de traitement d'adresse d'entrée (25), configuré pour actualiser l'adresse d'entrée d'index sur la page racine de la table de données avec l'adresse d'entrée de l'index temporaire après que le module de traitement de verrouillage obtient à nouveau le verrou, dans lequel
le module de traitement de verrouillage (22) est configuré en outre pour libérer le verrou obtenu à nouveau et le verrouillage partagé de schéma après que le module de traitement d'adresse d'entrée actualise l'adresse d'entrée d'index sur la page racine de la table de données avec l'adresse d'entrée de l'index temporaire.

2. Appareil de reconstruction d'index en ligne selon la revendication 1, comprenant en outre : un module de traitement de transaction, configuré pour recevoir une demande d'actualisation de données de la table de données, et actualiser les données de la table de données conformément à la demande d'actualisation.

3. Appareil de reconstruction d'index en ligne selon l'une ou l'autre des revendications let 2, comprenant en outre un module d'actualisation, configuré pour : quand des données d'index doivent être actualisées, déterminer que la page racine de la table de données comprend l'adresse d'entrée de l'index temporaire, et actualiser, dans l'index d'origine et l'index temporaire, les données d'index qui doivent être actualisées.

4. Appareil de reconstruction d'index en ligne selon la revendication 1, dans lequel le module de traitement d'adresse d'entrée est configuré spécifiquement pour changer l'adresse d'entrée d'index sur la page racine de la table de données avec l'adresse d'entrée de l'index temporaire et supprimer une adresse d'entrée de l'index d'origine.

5. Appareil de reconstruction d'index en ligne selon la revendication 1, dans lequel le module de traitement d'adresse d'entrée est configuré spécifiquement pour modifier l'adresse d'entrée de l'index temporaire afin qu'elle soit valide et une adresse d'entrée de l'index d'origine.

6. Procédé de reconstruction d'index en ligne, le procédé comprenant :
la réception (401) d'une demande de reconstruction d'index en ligne, la demande de reconstruction d'index en ligne comprenant un identifiant d'une table de données ;
l'ajout (402), conformément à la demande de reconstruction d'index en ligne, d'un verrouillage partagé de schéma à la table de données correspondant à l'identifiant de la table de données ;
l'obtention (402) d'un verrou et l'obtention d'un droit de contrôle de structure de la table de données en utilisant le verrou ;
après l'obtention du verrou, la réservation (403) d'un espace de mémorisation d'un index temporaire d'un index d'origine de la table de données, l'attribution d'une adresse d'entrée de l'index temporaire, et l'ajout de l'adresse d'entrée de l'index temporaire à une page racine de la table de données, dans lequel la page racine comprend une adresse d'entrée d'un index de la table de données, dans lequel l'adresse de l'index de la table de données est l'adresse d'entrée de l'index d'origine ;
la libération (404) du verrou au terme de l'ajout de l'adresse d'entrée de l'index temporaire à une page racine de la table de données ;
la construction (405) de l'index temporaire dans l'espace de mémorisation de l'index temporaire conformément à des données de l'index d'origine ;
l'obtention à nouveau (406) du verrou au terme de la construction de l'index temporaire dans l'espace de mémorisation de l'index temporaire ;
l'actualisation (407) de l'adresse d'entrée d'index sur la page racine de la table de données avec l'adresse d'entrée de l'index temporaire après l'obtention à nouveau du verrou ; et
la libération (408) du verrou obtenu à nouveau et du verrouillage partagé de schéma après l'actualisation de l'adresse d'entrée d'index sur la page racine de la table de données avec l'adresse d'entrée de l'index temporaire.

7. Procédé selon la revendication 6, comprenant en outre :
la réception d'une demande d'actualisation de données de la table de données, et l'actualisation des données de la table de données conformément à la demande d'actualisation.

8. Procédé selon la revendication 7, comprenant en outre, après l'actualisation des données de la table de données : quand des données d'index doivent être actualisées, la détermination que la page racine de la table de données comprend l'adresse d'entrée de l'index temporaire, et l'actualisation, dans l'index d'origine et l'index temporaire, des données d'index qui doivent être actualisées.

9. Procédé selon la revendication 6, dans lequel l'actualisation d'une adresse d'entrée d'index sur la page racine de la table de données avec l'adresse d'entrée de l'index temporaire consiste spécifiquement à changer l'adresse d'entrée d'index sur la page racine de la table de données avec l'adresse d'entrée de l'index temporaire et à supprimer une adresse d'entrée de l'index d'origine.

10. Procédé selon la revendication 6, dans lequel l'actualisation d'une adresse d'entrée d'index sur la page racine de la table de données avec l'adresse d'entrée de l'index temporaire consiste spécifiquement à modifier l'adresse d'entrée de l'index temporaire pour qu'elle soit valide et à supprimer une adresse d'entrée de l'index d'origine.
